# EUROPEAN PATENT SPECIFICATION

(11) **EP 1 270 394 B1**
(45) Date of publication and mention of the grant of the patent: **22.03.2006**
(21) Application number: 02012609.0
(22) Date of filing: 06.06.2002
(51) Int. Cl.: B62M 3/00

(54) **Bicycle crank and method for manufacturing said crank**
Fahrrad-Kurbel und ihre Fertigungsmethode
Pédalier pour bicyclette et procédé de fabrication

(30) Priority: 27.06.2001 IT TO20010617
(43) Date of publication of application: 02.01.2003
(73) Proprietor: Campagnolo Srl, 36100 Vicenza (VI) (IT)
(72) Inventor: Valle, Maurizio, 36100 Vicenza (IT)
(74) Representative: Checcacci, Giorgio

(56) References cited:
- EP-A- 0 270 388
- EP-A- 0 850 826
- WO-A-98/57840
- FR-A- 2 636 386
- US-A- 3 138 856
- US-A- 4 841 801
- US-A- 5 010 785
- US-A- 5 435 869
- US-A- 5 851 459
- US-B1- 6 305 243
- PATENT ABSTRACTS OF JAPAN vol. 1995, no. 02, 31 March 1995 (1995-03-31) & JP 06 321167 A (MITSUBISHI RAYON CO LTD), 22 November 1994 (1994-11-22)
- HEITZ E: "FASERVERSTAERKTE VERBUNDWERKSTOFFE IM FREIZEITGEREAT" GUMMI, FASERN, KUNSTSTOFFE. INTERNATIONALE FACHZEITSCHRIFT FUR DIE POLYMER-VERARBEITUNG, GENTNER VERLAG. STUTTGART, DE, vol. 49, no. 8, 1 August 1996 (1996-08-01), pages 646-651, XP000620540 ISSN: 0176-1625

## Description

This invention relates to a bicycle crank and a method for manufacturing said crank, according to the preamble of claim 1.

More precisely, this invention relates to a bicycle crank comprising:
an elongated core with a first and a second end,
a first and a second insert arranged on the ends of said core, and
a high-resistance fibre coating incorporated in a plastic material matrix.

US Patent no. 6,202,506 describes a bicycle crank of the type specified above, wherein the inserts are foamed into a rigid plastic material forming the core of the crank. This document discloses a method for manufacturing a crank comprising the following steps: introducing into a mould one layer of fabric soaked in synthetic resin providing a partially open fibre-reinforced plastic casing, inserting a pair of inserts in the partially open casing, foaming the-inserts with high-resistance foam, sealing the fibre-reinforced plastic material casing with at least one layer of fibre fabric soaked in plastic material, and hardening the fibre-reinforced plastic material and said foam.

WO 98/57840 discloses various bicycle crankshaft assemblies, where inserts are provided in the crankshaft for coupling to the crank arms and to the axle. Some assemblies provides for the use of composite materials made of a fibrous sheet impregnated in resin for certain portions of the assemblies.

US 4,841,801 discloses a connecting rod, including a core and two connectors at opposite ends of the core, for attachment to two respective structures. A tubular member, with parallel fibres disposed about the periphery of the core, is provided for resisting movements of the structures towards one another. A strap extends along the tubular member and the connectors to form a closed loop that resists movements of the structures away from one another.

The object of the present invention is to provide a crank and a method for manufacturing said crank providing a simpler connection between the inserts and the core, which does not require foaming the inserts in the mould.

According to this invention, this object is attained by means of a crank and a manufacturing method according to claims 1 and 12.

This invention will be better explained by the following detailed descriptions with reference to the accompanying figures, given as non-limiting example, wherein:
Figure 1 is a perspective view illustrating the components of a left crank according to this invention,
Figure 2 is a perspective longitudinal cross-section view of the components shown in figure 1,
Figure 3 is a perspective view illustrating the components of figure 1 in assembled configuration,
Figure 4 is a perspective exploded view illustrating the components of a right crank according to this invention,
Figure 5 schematically illustrates the lamination phase employing layers of carbon fibre for manufacturing a crank according to this invention,
Figure 6 is a longitudinal cross-section view of a crank according to this invention at the end of the lamination and carbon fibre polymerisation phase, and
Figure 7 is a top view of a finished crank.

With reference to figures from 1 to 3, numeral 10 indicates a pre-formed foamed plastic material core, such as polyurethane or similar material, obtained by foaming in mould. Core 10 has an elongated shape and presents two ends 12, 14, to which respective union elements 16, 18 are connected; said union elements being provided with recesses 20, 22 for receiving the end portions 12, 14 of the core 10 and establish a shape coupling therewith.

Numerals 24 and 26 indicate two metallic inserts, for example made of aluminium alloy, or fibre-reinforced plastic material, having end portions 28, 30 inserted into corresponding recesses 32, 34 of the union elements 16, 18 to establish a shape coupling therewith. The inserts 24, 26 consist preferably of solid metallic blocks. The inserts present holes for housing the pedal spindle and the bottom bracket spindle, respectively (not shown).

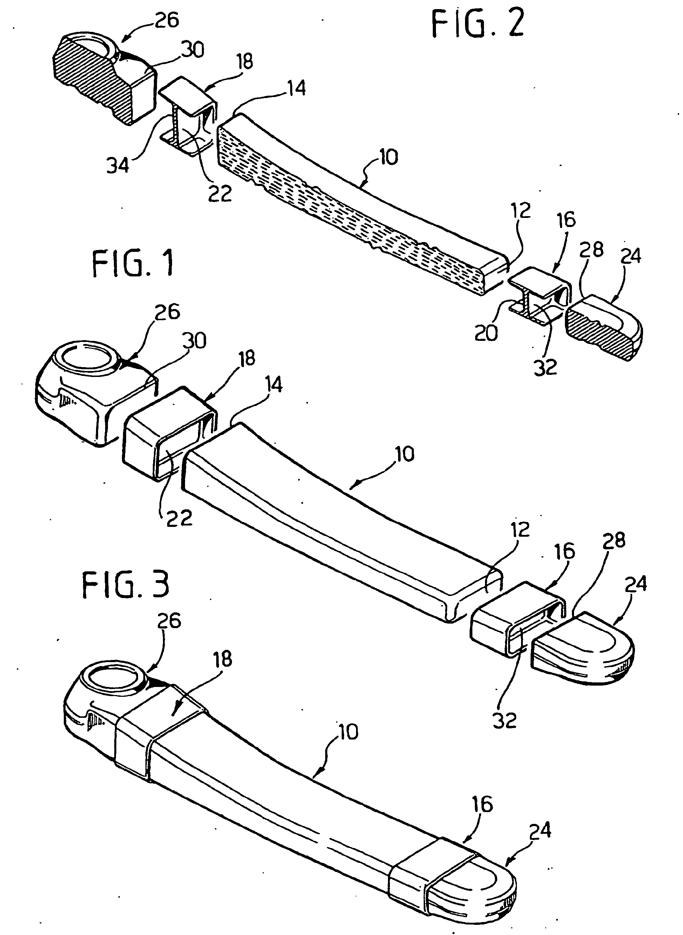

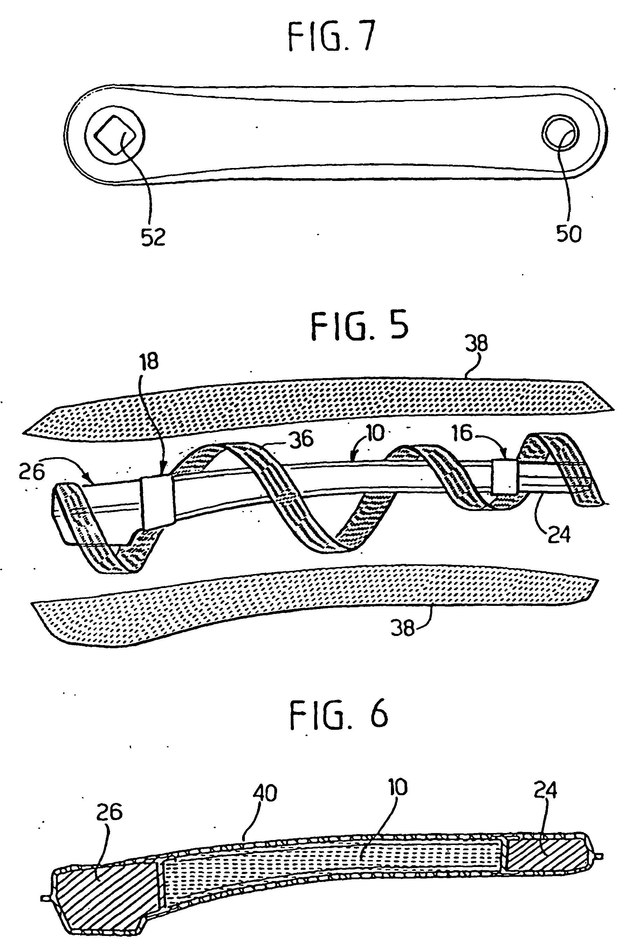

Figure 3 shows the arrangement formed by the core 10, the union elements 16, 18 and the metallic inserts 24, 26 in assembled condition. The core 10 does not present structural characteristics, i.e. does not transfer force or torque between the inserts 24, 26. The core 10 holds the inserts 24, 26 joined in a predefined position and forms a supporting surface during the lamination phase schematically illustrated in figure 5 and to provide a suitable contrast during moulding. The term "lamination" herein refers to the layering operations of the tapes 36 and the sheets 38 on the arrangement formed by the inserts 24, 26 and the core 10. This operation is used to direct the reinforcement fibres in the most suitable fashion to confer the required structural characteristics to the crank.

The arrangement shown in figure 3 is wrapped in tapes 36 and sheets 38 formed by structural high-resistance fibres incorporated in a plastic material matrix. Preferably, the tapes and the sheets 36, 38 are made of carbon fibre fabric incorporated in a thermosetting resin. The structural fibres can be selected among carbon fibres, glass fibres, aramidic fibres, boron fibres, ceramic fibres or any combinations thereof. After lamination, the crank is subjected to moulding and simultaneous heating at a temperature either equal to or higher than the polymerisation temperature of the thermosetting resin. The moulding operation is carried out in a mould and press (not shown). During moulding, the applied pressure is contrasted by the core and the inserts. This pressure compacts the plastic material matrix fabric.

After moulding, the plastic material matrix is hardened. The crank removed from the mould appears as shown schematically in figure 6, with a homogenous carbon fibre casing 40 enclosing the core 10 and the inserts 24, 26. The casing 40 has high-resistance structural characteristics and is capable of transferring the stress to which the crank is subjected during use from one insert to the other.

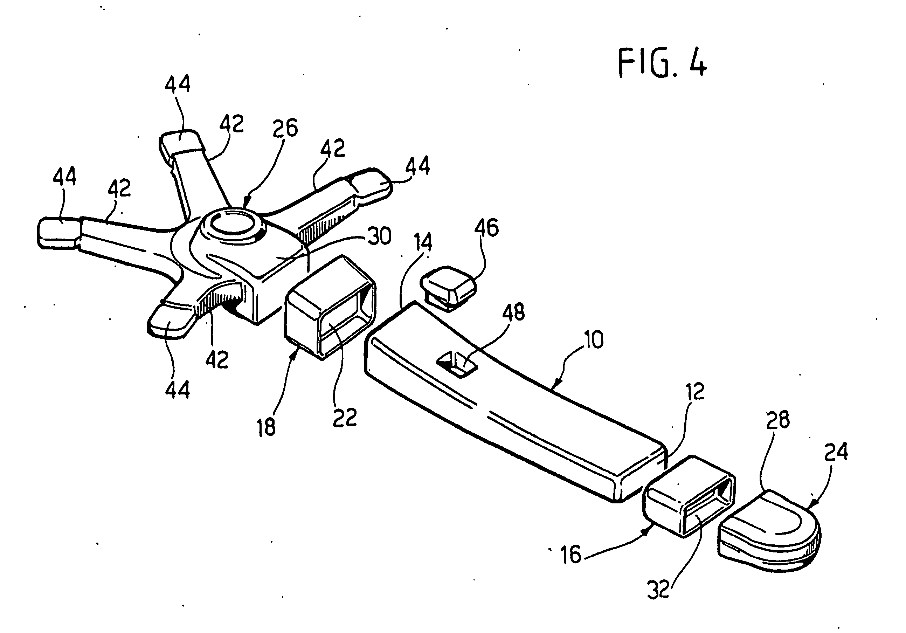

The method described above with reference to the left crank is used similarly for manufacturing the right crank, as shown in figure 4. In this case, the insert 26 for connecting the bottom bracket is equipped with a set of integral metallic spokes 42. In the form of embodiment shown in figure 4, the insert 26 has four spokes 42, which ends 44 form points for fastening a pair of chain wheels (not shown). A fifth fastening point is obtained by means of a third metallic insert 46 housed in a recess 48 formed in the core 10. The crank shown in figure 4 is subjected to lamination and polymerisation in the mould similarly as described above.

Both in the case of the left crank and in the case of the right crank, the inserts are subjected to mechanical machining to form a threaded hole 50 for connecting a pedal spindle and a polygonal hole 52 for connecting a bottom bracket spindle after polymerisation in mould.

As already said, the core 10 does not present, substantially, any structural resistance, the only part of the crank having structural characteristics being the casing 40, which presents a high-resistance and is capable of transferring the force and the torque between the inserts 24 and 26 during the use of the crank.

Therefore, the core 10 can be made of any material which gives a form and a support to the structural fibres, such as any kind of foam, wax or resin.

In accordance with a preferred embodiment of the present invention, the core 10 is removed after moulding and hardening of the structural fibre casing 40. The core can be formed by granular material, e.g. sand, mixed with a binding resin. The granular material can be extracted from the crank through a hole in the structural fibre casing 40 after the hardening of the same casing 40, thereby forming a single structural unit formed only by the casing 40 of structural fibres and the metallic inserts 24 and 26.

In view of the above description it will be evident that the crank in accordance with the present invention is formed by a single structural unit consisting only of a casing of structural fibres and of at least a pair of inserts arranged at the end of the casing. These are in fact the only structural components of the crank, i.e. the components that are able to transmit a load during normal use of the crank.

Naturally, numerous changes can be implemented to the construction and forms of embodiment of the invention herein envisaged, all comprised within the context of the concept characterising this invention, as defined by the following claims.

## Claims

1. Bicycle crank comprising, in a single structural unit, an elongated core (10), a casing (40) of structural fibres incorporated in a plastic material matrix and a first and a second insert (24, 26) arranged at the ends of said casing (40) for connecting the bicycle crank to a pedal and to a bottom bracket spindle, **characterised in that** said first and second insert (24, 26) are structurally connected only or substantially only to said casing (40), the core (10) presenting only a limited structural resistance so that the greater part of the force between the inserets (24, 26) is transfered by the casing (40), and; said casing (40) is made from tapes (36) and sheets (38) wrapped onto said inserts (24, 26), said tapes (36) and sheets (38) being formed by said structural fibres incorporated in said plastic material matrix, wherein the crank further comprises union elements (16, 18) for establishing a shape coupling between said inserts (24, 26) and said core (10).

2. Bicycle crank according to claim 1, **characterised in that** it comprises a third insert (46) arranged in an intermediate area of said crank.

3. Bicycle crank according to claim 1, **characterised in that** said structural fibres are chosen among carbon fibres, glass fibres, aramidic fibres, boron fibres, ceramic fibres or any combinations thereof.

4. Bicycle crank according to claim 1, **characterised in that** said inserts (24, 26) are metallic.

5. Bicycle crank according to claim 4, **characterised in that** said inserts (24, 26) are made of an aluminium alloy.

6. Bicycle crank according to claim 1, **characterised in that** said inserts (24, 26) are made of fibre-reinforced plastic material.

7. Bicycle crank according to claim 1, **characterised in that** said elongated core (10) presents, substantially, no structural resistance.

8. Bicycle crank according to claim 7, **characterised in that** said elongated core (10) is made of a material chosen among a foam, a wax and a resin.

9. Bicycle crank according to claim 8, **characterised in that** said elongated core (10) is a preformed body of foamed plastic material.

10. Bicycle crank according to claim 1, **characterised in that** said elongated core (10) presents end portions (12, 14) and said union elements (16, 18) present recesses (20, 32, 22, 34) for establishing a shape coupling with said inserts (24, 26) and said end portions (12, 14) of said elongated core (10).

11. Bicycle crank according to claim 1, **characterised in that** said plastic material matrix is a thermosetting resin.

12. Method of manufacturing a bicycle crank, **characterised by** comprising the following steps:
a) forming an elongated core (10),
b) applying a pair of inserts (24, 26) to the opposite ends (12, 14) of said elongated core (10) by means of union elements (16, 18),
c) wrapping tapes (24) and sheets (26) of structural fibres incorporated in a plastic material matrix onto the elongated core (10) and the inserts (24, 26), and
d) structurally connecting the inserts (24, 26) by hardening said plastic material matrix to form a high resistance rigid single casing (40) enclosing said elongated core (10) and said inserts (24, 26) the core (10) presenting only a limited structural resistance so that said casing (40) transfers the greater part of the force between the inserts (24, 26).

13. Method according to claim 12, **characterised in that** said plastic material matrix is a thermosetting resin.

14. Method according to claim 12, **characterised in that** it comprises the step of removing the elongated core (10) after hardening of said plastic material matrix.

15. Method according to claim 14, **characterised in that** said elongated core (10) is formed of granular material which is extracted through a hole in said hardened rigid casing (40).

16. Method according to claim 12, **characterised in that** it comprises the step of applying a third insert (46) in an intermediate area of said elongated core (10).

## Patentansprüche

1. Fahrradkurbel umfassend, in einer einzelnen strukturellen Einheit, einen länglichen Kern (10), ein Gehäuse (40) aus in einer Kunststoffmatrix aufgenommenen Strukturfasern und ein erstes und ein zweites Einsatzstück (24, 26), angeordnet an den Enden des Gehäuses (40), zum Verbinden der Fahrradkurbel mit einem Pedal und mit einer Tretlagerspindel, **dadurch gekennzeichnet, dass** das erste und das zweite Einsatzstück (24, 26) strukturell nur oder im Wesentlichen nur mit dem Gehäuse 40 verbunden sind, der Kern (10) nur eine begrenzte strukturelle Festigkeit aufweist, so dass der größere Teil der Kraft zwischen den Einsatzstücken (24, 26) durch das Gehäuse (40) übertragen wird, und das Gehäuse (40) aus auf die Einsatzstücke (16, 18) gewickelten Bändern (36) und Bahnen (38) besteht, die durch die in die Kunststoffmatrix aufgenommenen Strukturfasern gebildet werden, wobei die Kurbel des Weiteren Verbindungselemente (16, 18) zum Einrichten einer Profilteil-Kupplung zwischen den Einsatzstücken (24, 26) und dem Kern (10) umfasst.

2. Fahrradkurbel nach Anspruch 1, **dadurch gekennzeichnet, dass** diese ein drittes Einsatzstück (46) umfasst, das in einem Zwischenbereich der Kurbel angeordnet ist.

3. Fahrradkurbel nach Anspruch 1, **dadurch gekennzeichnet, dass** die Strukturfasern unter Karbonfasern, Glasfasern, Aramidfasern, Borfasern, Keramikfasern oder jeder Kombination davon ausgewählt werden.

4. Fahrradkurbel nach Anspruch 1, **dadurch gekennzeichnet, dass** die Einsatzstücke (24, 26) metallisch sind.

5. Fahrradkurbel nach Anspruch 4, **dadurch gekennzeichnet, dass** die Einsatzstücke (24, 26) aus einer Aluminiumlegierung sind.

6. Fahrradkurbel nach Anspruch 1, **dadurch gekennzeichnet, dass** die Einsatzstücke (24, 26) aus faserverstärktem Kunststoff sind.

7. Fahrrädkurbel nach Anspruch 1, **dadurch gekennzeichnet, dass** der längliche Kern (10) im Wesentlichen keine strukturelle Festigkeit aufweist.

8. Fahrradkurbel nach Anspruch 7, **dadurch gekennzelchnet, dass** der längliche Kern (10) aus einem Material ist, das unter Schaumstoff, Wachs und Kunstharz ausgewählt wird.

9. Fahrradkurbel nach Anspruch 8, **dadurch gekennzeichnet, dass** der längliche Kern (10) ein vorgefertigter Körper aus geschäumtem Kunststoff ist.

10. Fahrradkurbel nach Anspruch 1, **dadurch gekennzeichnet, dass** der längliche Kern (10) Endabschnitte (12, 14) aufweist und die Verbindungselemente (16, 18) Ausnehmungen (20, 32, 22, 34) zum Einrichten einer Profilteil-Kupplung mit den Einsatzstücken (24, 26) und den Endabschnitten (12, 14) des länglichen Kerns aufweisen.

11. Fahrradkurbel nach Anspruch 1, **dadurch gekennzeichnet, dass** die Kunststoffmatrix ein Reaktionsharz ist.

12. Verfahren zum Herstellen einer Fahrrädkurbel, **dadurch gekennzeichnet, dass** es die folgenden Schritte umfasst:
(a) Bilden eines länglichen Kerns (10)
(b) Ansetzen eines Paares von Einsatzstücken (24, 26) an die einander gegenüberliegenden Enden (12, 14) des länglichen Kerns (10) mittels der Verbindungselemente (16, 18).
(c) Wickeln der Bänder (24) und Bahnen (26) aus in einer Kunststoffmatrix aufgenommenen Strukturfasern auf den länglichen Kern (10) und die Einsatzstücke (24, 26) und
(d) Einzelverbinden der Einsatzstücke (24, 26) durch Härten der Kunststoffmatrix, um ein hochfestes, formfestes einzelnes Gehäuse (40) zu bilden, das den länglichen Kern (10) und die Einsatzstücke (24, 26) einschließt, wobei der Kern (10) nur eine begrenzte strukturelle Festigkeit aufweist, so dass das Gehäuse (40) den größeren Teil der Kraft zwischen den Einsatzstücken (24, 26) überträgt.

13. Verfahren nach Anspruch 12, **dadurch gekennzeichnet, dass** die Kunststoffmatrix ein Reaktionsharz ist.

14. Verfahren nach Anspruch 12, **dadurch gekennzeichnet, dass** es den Schritt des Entfernens des länglichen Kerns (10) nach dem Härten der Kunststoffmatrix umfasst.

15. Verfahren nach Anspruch 14, **dadurch gekennzeichnet, dass** der längliche Kern aus einem körnigen Material ist, das durch ein Loch in dem gehärteten formfesten Gehäuse (40) extrahiert wird.

16. Verfahren nach Anspruch 12, **dadurch gekennzeichnet, dass** es den Schritt des Ansetzens eines dritten Einsatzstückes (46) in einem Zwischenbereich des länglichen Kerns (10) umfasst.

## Revendications

1. Manivelle pour bicyclette comprenant, en une unité structurelle unique, une âme allongée (10), une enveloppe (40) en fibres structurelles incorporées dans une matrice en matière plastique et un premier et un deuxième insert (24, 26) placés aux extrémités de l'enveloppe (40) pour relier la manivelle pour bicyclette à une pédale et à un axe du pédalier, **caractérisée en ce que** les premier et deuxième inserts (24, 26) sont reliés structurellement uniquement ou sensiblement uniquement à l'enveloppe (40), l'âme (10) ne présentant qu'une résistance structurelle limitée afin que la majeure partie de la force s'exerçant entre les inserts (24, 26) soit transmise par l'enveloppe, et **en ce que** l'enveloppe (40) est constituée de bandes (36) et de plaques (38) enroulées sur les inserts (16, 18), les bandes (36) et plaques (38) étant constituées par les fibres structurelles incorporées dans la matrice en matière plastique, la manivelle comprenant, en outre, des éléments de raccordement (16, 18) permettant d'établir un assemblage par complémentarité de formes entre les inserts (24, 26) et l'âme (10).

2. Manivelle pour bicyclette selon la revendication 1, **caractérisée en ce qu'**elle comprend un troisième insert (46) monté dans une zone intermédiaire de la manivelle.

3. Manivelle pour bicyclette selon la revendication 1, **caractérisée en ce que** les fibres structurelles sont choisies parmi les fibres de carbone, les fibres de verre, les fibres d'aramide, les fibres de bore, les fibres de céramique, ou toute combinaison de celles-ci.

4. Manivelle pour bicyclette selon la revendication 1, **caractérisée en ce que** les inserts (24, 26) sont métalliques.

5. Manivelle pour bicyclette selon la revendication 4, **caractérisée en ce que** les inserts (24, 26) sont constitués dans un alliage d'aluminium.

6. Manivelle pour bicyclette selon la revendication 1, **caractérisée en ce que** les inserts (24, 26) sont constitués en matière plastique renforcée par des fibres.

7. Manivelle pour bicyclette selon la revendication 1, **caractérisée en ce que** l'àme allongée (10) ne présente sensiblement aucune résistance structurelle.

8. Manivelle pour bicyclette selon la revendication 7, **caractérisée en ce que** l'âme allongée (10) est constituée dans un matériau choisi entre une mousse, une cire et une résine.

9. Manivelle pour bicyclette selon la revendication 8, **caractérisée en ce que** l'âme allongée (10) est un corps préformé en matière plastique expansée.

10. Manivelle pour bicyclette selon la revendication 1, **caractérisée en ce que** l'âme allongée (10) présente des parties terminales (12, 14) et **en ce que** les éléments de raccordement (16, 1 8) présentent des évidements (20, 32, 22, 34) permettant d'établir un assemblage par complémentarité de formes entre les inserts (24, 26) et les parties terminales (12, 14) de l'âme allongée (10).

11. Manivelle pour bicyclette selon la revendication 1, **caractérisée en ce que** la matrice en matière plastique est une résine thermodurcissable.

12. Procédé de fabrication d'une manivelle pour bicyclette, **caractérisé en ce qu'**il comprend les étapes suivantes :
a) formage d'une âme allongée (10),
b) placement d'une paire d'inserts (24. 26) aux extrémités opposées (12, 14) de l'âme allongée (10), par l'intermédiaire d'éléments de raccordement (16, 18),
c) enroulement de bandes (24) et plaques (26) en fibres structurelles incorporées dans une matrice en matière plastique sur l'âme allongée (10) et sur les inserts (24, 26), et
d) relier structurellement les inserts (24, 26) par durcissement de la matrice en matière plastique pour former une enveloppe unique (40) rigide haute résistance enveloppant l'âme allongée (10) et les inserts (24, 26), l'âme (10) ne présentant qu'une résistance structurelle limitée afin que l'enveloppe (40) transfère la majeure partie de la force s'exerçant entre les inserts (24, 26).

13. Procédé selon la revendication 12, **caractérisé en ce que** la matrice en matière plastique est une résine thermodurcissable.

14. Procédé selon la revendication 12, **caractérisé en ce qu'**il comprend l'étape qui consiste à retirer l'âme allongée (10) après durcissement de la matrice en matière plastique.

15. Procédé selon la revendication 14, **caractérisé en ce que** l'âme allongée (10) est constituée de matière granulée qui est extraite par un trou ménagé dans l'enveloppe (40) rigide durcie.

16. Procédé selon la revendication 12, **caractérisé en ce qu'**il comprend l'étape qui consiste à placer un troisième insert (46) dans une zone intermédiaire de l'âme allongée (10).
